# EUROPÄISCHE PATENTSCHRIFT

(11) **EP 3 937 356 B1**
(45) Veröffentlichungstag und Bekanntmachung des Hinweises auf die Patenterteilung: **27.05.2026**
(21) Anmeldenummer: 21181967.7
(22) Anmeldetag: 28.06.2021
(51) Int. Cl.: H02K 15/04, H02K 3/12

(54) **VERFAHREN UND VORRICHTUNG ZUM HERSTELLEN EINER DRAHTKONTUR FÜR EIN SPULENELEMENT EINER SPULENWICKLUNG EINER ELEKTRISCHEN MASCHINE**
METHOD AND DEVICE FOR PRODUCING A WIRE CONTOUR FOR A COIL ELEMENT OF A COIL OF AN ELECTRIC MACHINE
PROCÉDÉ ET DISPOSITIF DE FABRICATION D'UN CONTOUR DE FIL POUR UN ÉLÉMENT BOBINE D'UN BOBINAGE D'UNE MACHINE ÉLECTRIQUE

(30) Priorität: 06.07.2020 DE 102020117729
(43) Veröffentlichungstag der Anmeldung: 12.01.2022
(73) Patentinhaber: Aumann Espelkamp GmbH, 32339 Espelkamp (DE)
(72) Erfinder: DUNKER, Alexander, 32351 Stemwede-Drohne (DE); LÜTTGE, Wolfgang, 31787 Hameln (DE)
(74) Vertreter: Bittner, Thomas L.

(56) Entgegenhaltungen:
- WO-A1-2019/166061
- DE-A1- 102016 203 167
- DE-A1- 102017 127 634
- GB-A- 1 590 919
- US-A1- 2003 019 270

## Beschreibung

Die Erfindung betrifft ein Verfahren und eine Vorrichtung zum Herstellen einer Drahtkontur für ein Spulenelement einer Spulenwicklung einer elektrischen Maschine.

### Hintergrund

Zum Herstellen von Spulenelementen für eine Spulenwicklung einer elektrischen Maschine werden regelmäßig Drahtabschnitte oder -stücke eines elektrisch leitenden Materials mittels einer Biege- oder Formvorrichtung geformt. Bekannt sind solche Spulenelemente beispielsweise als sogenannte Hairpins oder Wellenwicklungen.

Im Dokument DE 103 28 955 A1 sind ein Verfahren und eine Vorrichtung zum Formen (Biegen) von Wellenwicklungen für Rotor- und Stator Blechpakete elektrischer Maschinen offenbart. Die Wellenwicklung wird in einem Formungsprozess hergestellt, bei dem übereinander angeordnete Scheiben außen umlaufend Formvorsprünge aufweisen. Im Prozess der Herstellung der Wellenwicklung drehen sich die beiden übereinander angeordneten gemeinsam kontinuierlich. Mit Hilfe einer Drahtführeinrichtung, welche sich unterbrochen dreht, wird der zu formende oder zu biegende Draht abwechselnd um die Formvorsprünge an den beiden Scheiben gelegt. Auf diese Weise entsteht dann die Wellenwicklung.

Im Dokument DE 10 2017 127 634 A1 wird eine Vorrichtung und ein Verfahren zum Biegen und Herstellen von Wellenwicklungen für Spulenwicklungen elektrischer Maschinen beschrieben. Zum Biegen des Drahts sind Biegeeinheiten vorgesehen, die jeweils mit Biege- oder Formelementen gebildet sind. Die einer Biegeeinheit zugeordneten Formelemente sind entlang einer ersten und einer zweiten Linearführung verschieblich gelagert. Nachdem der zu biegende Draht eingelegt ist, werden die Formelemente relativ zueinander verlagert, was eine Verschiebung entlang der ersten und der zweiten Linearführung sowie eine Schwenkbewegung umfasst. Am Ende dieser Verlagerung entlang der ersten und der zweiten Linearführung sind die Formelemente nebeneinander angeordnet und der Draht ist zur Wellenwicklung gebogen. Danach kann die Wellenwicklung aus der Biegeeinheit entnommen werden, und die Formelemente werden in der ortsfest angeordneten Biegeeinheit in ihrer Ausgangsstellung zurückgebracht, um einen neuen Biege- oder Formvorgang auszuführen. Dieses bedeutet, dass mittels der Biegeeinheit ein neuer Biegevorgang stets erst begonnen werden kann, nachdem der zuvor zur Wellenwicklung geformte Drahtabschnitt aus der Biegeeinheit entnommen ist, um diese dann neu mit einem geraden Drahtabschnitt zu beladen.

Dokument US 2011 / 0 277 315 A1 betrifft ein Verfahren zur Herstellung einer Statorspule und eine Maschine zur Herstellung einer Statorspule für eine elektrisch rotierende Maschine. Die Maschine zur Herstellung von Statorspulen weist einen drehbaren Halter auf, der Formpressenpaare hält und entlang einer Schleifenbahn bewegbar ist, um Abschnitte eines Leiterdrahtes in nuteninterne Abschnitte zu pressen, die in Nuten eines Statorkerns angeordnet werden. Die Maschine weist weiterhin Spulenendabschnitte auf, die sich außerhalb der Nuten erstrecken. Das Verfahren umfasst das Formen von Spulenendabschnitten, bei dem Pressenelemente jedes der formgebenden Pressenpaare nacheinander nahe aneinander gebracht werden, um die Spulenendabschnitte zu formen, und das Formen von Schlitzabschnitten, bei dem die formgebenden Pressenpaare auf der Schleifenbahn in Kontakt mit dem Nockenmechanismus vorwärtsbewegt werden und außerdem ausgewählte der formgebenden Pressenpaare nacheinander in einer Richtung senkrecht zur Bahn bewegt werden, um die Schlitzabschnitte zu formen.

Dokument DE 10 2016 203 167 A1 offenbart eine Vorrichtung zum Herstellen eines wellenförmig gebogenen Drahtsegments für die Verwendung als Statorwicklung in einer elektrischen Maschine mit einer Linearführung und mit mehreren Formwerkzeugen, die längsverschieblich und drehbar an der Linearführung gelagert sind und die jeweils einen Aufnahmebereich zur Fixierung des zu biegenden Drahtsegments aufweisen. Die Formwerkzeuge sind gegensinnig verdrehbar und gleichzeitig entlang der Linearführung zusammenfahrbar, um das daran fixierte Drahtsegment in eine Wellenform biegen zu können. Ferner ist ein mit dieser Vorrichtung ausführbares Verfahren zum Herstellen eines wellenförmig gebogenen Drahtsegments beschrieben.

### Zusammenfassung

Aufgabe der Erfindung ist es, ein Verfahren sowie eine Vorrichtung zum Herstellen einer Drahtkontur für ein Spulenelement einer Spulenwicklung einer elektrischen Maschine anzugeben, mit denen die Prozessführung beim Biegen oder Formen der Drahtkontur optimiert werden kann.

Zur Lösung sind ein Verfahren sowie eine Vorrichtung zum Herstellen einer Drahtkontur für ein Spulenelement einer Spulenwicklung einer elektrischen Maschine nach den unabhängigen Ansprüchen 1 und 14 geschaffen. Ausgestaltungen sind Gegenstand von abhängigen Unteransprüchen.

Nach einem Aspekt ist ein Verfahren zum Herstellen einer Drahtkontur für ein Spulenelement einer Spulenwicklung einer elektrischen Maschine geschaffen, bei dem Folgendes vorgesehen ist: Bereitstellen einer Biegeeinheit mit Formelementen, die entlang einer Prozessstrecke verlagerbar ist; Aufnehmen und Klemmen eines Drahtabschnitts in der Biegeeinheit in einem Aufnahmebereich entlang der Prozessstrecke; Ausführen eines Biegevorgangs, bei dem der Drahtabschnitt mittels der Formelemente der Biegeeinheit zu einer Drahtkontur für ein Spulenelement einer Spulenwicklung einer elektrischen Maschine geformt oder gebogen wird; und Lösen der Drahtkontur aus der Biegeeinheit in einem Abgabebereich, der entlang der Prozessstrecke beabstandet von dem Aufnahmebereich angeordnet ist. Der Biegevorgang umfasst weiterhin Folgendes: Verlagern der Biegeeinheit mit den Formelementen mittels einer Vorschubbewegung zwischen der Aufnahmebereich und der Abgabebereich und Verlagern der Formelemente relativ zueinander mittels einer Biegebewegung, um den in der Biegeeinheit aufgenommen Drahtabschnitt zur Drahtkontur zu formen.

Nach einem weiteren Aspekt ist eine Vorrichtung zum Herstellen einer Drahtkontur für ein Spulenelement einer Spulenwicklung einer elektrischen Maschine geschaffen, die Folgendes aufweist: eine Prozessstrecke; eine Biegeeinheit mit Formelementen und eine Steuer- und Betriebseinrichtung, die der Prozessstrecke zugeordnet und eingerichtet ist, im Biegebetrieb die Biegeeinheit mittels einer Vorschubbewegung entlang der Prozessstrecke zu verlagern.

Die Steuer- und Betriebseinrichtung ist weiterhin eingerichtet, Folgendes zu steuern: Aufnehmen und Klemmen eines Drahtabschnitts in der Biegeeinheit in einem Aufnahmebereich entlang der Prozessstrecke; Ausführen eines Biegevorgangs, bei dem der Drahtabschnitt mittels der Formelemente der Biegeeinheit zu einer Drahtkontur für ein Spulenelement einer Spulenwicklung einer elektrischen Maschine geformt wird; und Lösen der Drahtkontur aus der Biegeeinheit in einem Abgabebereich, der entlang der Prozessstrecke beabstandet von dem Aufnahmebereich angeordnet ist. Der Biegevorgang umfasst weiterhin Folgendes: Verlagern der Biegeeinheit mit den Formelementen mittels einer Vorschubbewegung zwischen der Aufnahmebereich und der Abgabebereich und Verlagern der Formelemente relativ zueinander mittels einer Biegebewegung, um den in der Biegeeinheit aufgenommen Drahtabschnitt zur Drahtkontur zu formen.

Bei dem Formvorgang zum Herstellen der Drahtkontur oder -formung für das Spulenelement, welcher im Wesentlichen den Biegevorgang umfasst, aber auch ergänzende Formungsschritte aufweisen kann, finden somit unterschiedliche Bewegungen oder Verlagerungen im Zusammenhang mit dem Betrieb der Biegeeinheit in der Prozessstrecke statt. Einerseits wird die Biegeeinheit mit den ihr zugeordneten Biege- oder Formelementen entlang der Prozessstrecke (vorwärts) verlagert (Vorschubbewegung). Zusätzlich werden die Formelemente relativ zueinander verlagert (Biege- oder Formbewegung), um den Drahtabschnitt zur Drahtkontur zu formen, insbesondere zu biegen. Auf diese Weise wird der im Aufnahmebereich der Prozessstrecke aufgenommene und geklemmte Drahtabschnitt in den vom Aufnahmebereich örtlich beabstandeten Abgabebereich verbracht, um dort die hergestellte Drahtkontur aus der Biegeeinheit herauszunehmen. Hierdurch wird die Biegeeinheit mit den ihr zugeordneten Formelementen als Gesamtheit entlang der Prozessstrecke von dem Aufnahmebereich in den Abgabebereich verbracht. Des Weiteren werden im Rahmen des Biegevorgangs die Formelemente der Biegeeinheit relativ zueinander bewegt, um den ursprünglichen Drahtabschnitt zur Drahtkontur zu formen. Nachdem die Biegeeinheit mit dem aufgenommenen Drahtabschnitt den Aufnahmebereich verlassen hat, kann dort eine andere Biegeeinheit vergleichbar einen weiteren Drahtabschnitt aufnehmen, wodurch ein kontinuierlicher Prozess ermöglicht ist, wenn entlang der Prozessstrecke mehrere Biegeeinheiten mit jeweils zugeordneten Formelementen verlagerbar aufgenommen sind.

Beim Formen des Drahtabschnitts zur Drahtkontur, welches im Wesentlichen oder überwiegend mittels Biegen ausgeführt wird, aber auch ergänzende Formungsschritte umfassen kann, können die Formelemente der Biegeeinheit eine Schwenkbewegung und / oder eine translatorische Bewegung (Linearbewegung) ausführen, wobei sich die Formelemente der Biegeeinheit hierbei relativ zueinander verlagern. Biegeeinheiten mit zugeordneten Formelementen sind als solche in verschiedenen Ausführungsformen bekannt.

Die Biegebewegung der Formelemente kann in einer Ausführung eine von außen den Formelementen aufgezwungenen Bewegung sein, beispielsweise aufgrund einer Verlagerung der Biegeeinheit mit den Formelementen entlang einer Führungseinrichtung der Prozessstrecke. Die Biegeeinheit wird mittels der Vorschubbewegung entlang der Führungseinrichtung verlagert. Die eine oder die mehreren Biegeeinheiten können hierbei entlang der Prozessstrecke die Vorschubbewegung entlang einer der oder den Biegeeinheiten zugeordneten Führung ausführen. Hierbei kann vorgesehen sein, dass die Formelemente der Biegeeinheit verschiedenen Führungselemente zugeordnet sind, für die sich entlang der Prozessstrecke der gegenseitige Abstand ändert, was zwangsweise zur Relativverlagerung der Formelemente führt, um den Drahtabschnitt zur Drahtkontur zu formen. Beispielsweise können Führungselemente auseinander laufen, was für einzelne der Formelemente eine Schwenk- oder Drehbewegung erzwingt, um so das Biegen oder Formen des Drahtabschnitts in der Biegeeinheit zu bewirken.

Die Vorschubbewegung und die Biegebewegung können wenigstens teilweise zeitgleich (simultan) ausgeführt werden. Es erfolgt also der Vorschub der Biegeeinheit mit dem hierin aufgenommen Drahtabschnitt gleichzeitig zum Vorgang des Biegens oder Formens des Drahtabschnitts zur Drahtkontur. Vorschubbewegung und Biegebewegung überlagern sich zumindest in zeitlicher Hinsicht.

Die Biegeeinheit kann während des relativen Verlagerns der Formelemente mittels der Biegebewegung zum Formen des Drahtabschnitts kontinuierlich mittels der Vorschubbewegung entlang der Prozessstrecke verlagert werden. Bei dieser Ausführungsform wird die Vorschubbewegung zur Verlagerung der Biegeeinheit mit dem hierin aufgenommen Drahtabschnitt kontinuierlich und nicht unterbrochen ausgeführt, während der Drahtabschnitt mittels der Biegebewegung zu der Drahtkontur geformt wird.

Während des relativen Verlagerns der Formelemente zueinander bei der Biegebewegung zum Formen des Drahtabschnitts kann die Biegeeinheit entlang der Prozessstrecke zumindest zeitweise frei von der Vorschubbewegung in einer Ruhestellung verbleiben. Bei dieser alternativen Ausführungsform ist die Vorschubbewegung zeitweise unterbrochen, beispielsweise ganz oder teilweise während der Biegebewegung zum Formen des Drahtabschnitts. Der Vorschub kann beispielsweise unterbrochen werden, wenn der Drahtabschnitt in der Biegeeinheit aufgenommen wird. Alternativ oder ergänzend kann der Vorschub zeitweise ausgesetzt werden, wenn der Drahtabschnitt in der Biegeeinheit geklemmt wird. Eine Unterbrechung kann alternativ oder ergänzend beim Lösen der Drahtkontur aus der Biegeeinheit vorgesehen sein.

Die Biegeeinheit kann während des Aufnehmens und / oder des Klemmens des Drahtabschnitts, also zeitgleich hierzu, zumindest zeitweise mittels der Vorschubbewegung entlang der Prozessstrecke bewegt werden. Die Biegeeinheit wird mittels der Vorschubbewegung entlang der Prozessstrecke zumindest zeitweise auch bewegt oder verlagert, während der Drahtabschnitt in der Biegeeinheit aufgenommen und / oder geklemmt wird. Als Resultat der Vorschubbewegung während der Aufnahme kann ein definierter Drahtzug im Drahtabschnitt aufgebracht werden. Es kann vorgesehen sein, dass während des Aufnehmens und / oder des Klemmens des Drahtabschnitts die Vorschubbewegung kontinuierlich und durchgehend ausgeführt wird. Auf diese Weise kann der Zeitaufwand für das Beladen der Biegeeinheit mit dem zu formenden Drahtabschnitt minimiert werden, wobei ein Ausführen der Beladung (Aufnehmen und Klemmen) ohne Anhalten der Biegeeinheiten vorgesehen sein kann.

Die Biegeeinheit kann während des Lösens der Drahtkontur aus der Biegeeinheit zumindest zeitweise mittels der Vorschubbewegung entlang der Prozessstrecke bewegt werden. Es kann vorgesehen sein, dass die Biegeeinheit mit den Formelementen während des Lösens der Drahtkontur aus der Biegeeinheit kontinuierliche mittels der Vorschubbewegung entlang der Prozessstrecke bewegt wird. Dadurch, dass die Vorschubbewegung während des Lösens der Drahtkontur wenigstens zweitweise oder sogar kontinuierlich ausgeführt wird, kann in der Prozessführung der zeitliche Aufwand für das Lösen der Drahtkontur aus der Biegeeinheit minimiert werden. Auch ein Herauslösen der Drahtkontur aus der Biegeeinheit ohne Anhalten beim derartigen Entladen der Biegeeinheit kann vorgesehen sein.

Der Drahtabschnitt kann mit einer vorgegebenen Drahtzugspannung beaufschlagt werden. Die Drahtzugspannung kann zumindest beim Aufnehmen des Drahtabschnitts in der Biegeeinheit ausgebildet sein. Die vorgegebene Drahtzugspannung wird vor dem Klemmen ausgebildet und bis zum Klemmen aufrechterhalten werden. Hierzu kann beispielweise die Vorschubbewegung der Biegeeinheit entlang der Prozessstrecke entsprechend gesteuert werden, so dass eine geringere oder größere Zugspannung auf den Drahtabschnitt ausgeübt wird.

Der Drahtabschnitt kann vor dem Aufnehmen in der Biegeeinheit in der Prozessstrecke vorbearbeitet werden. Das Vorbearbeiten des Drahtabschnitts kann zum Beispiel ein Richten des Drahtabschnitts umfassen. Alternativ oder ergänzend kann eine Prüfung einer elektrischen Isolierung an dem Drahtabschnitt und / oder eine Prüfung der Drahtgeometrie bzw. - kontur vorbereitend durchgeführt werden. Während des Vorbearbeitens kann der Drahtabschnitt zeitweise oder kontinuierlich entlang der Prozessstrecke verlagert werden. Dieses kann zum Beispiel dadurch verursacht sein, dass eine der Biegeeinheit, die den aktuellen Drahtabschnitt aufnehmen soll, mittels Vorschub entlang der Prozesskette bewegt wird und so den aktuellen Drahtabschnitt hinter sich herzieht. Auf diese Weise kann der zeitliche Aufwand für das Vorbearbeiten des Drahtabschnitts in entlang der Prozessstrecke minimiert werden. Insbesondere kann eine Vorbearbeitung des Drahtabschnitts ohne Anhalten vorgesehen sein.

Der Drahtabschnitt kann vor dem Ausführen des Biegevorgangs von einem Endlosdrahtvorrat getrennt werden. Der Endlosdrahtvorrat kann beispielsweise von einer Drahtrolle abgewickelt werden. Während des Trennens des Drahtabschnitts von dem Endlosdrahtvorrat kann die Vorschubbewegung der Biegeeinheit zumindest zeitweise oder kontinuierlich fortgesetzt werden, so dass der Drahtabschnitt während des Trennens entlang der Prozessstrecke bewegt wird, was den Zeitaufwand für den Prozessschritt des Trennens minimiert. Das Trennen des Drahtabschnitts von dem Endlosdrahtvorrat kann zu verschiedenen alternativen Zeitpunkten ausgeführt werden, beispielsweise vor dem Aufnehmen des Drahtabschnitts in der Biegeeinheit, alternativ nach dem Aufnehmen und vor dem Klemmen des Drahtabschnitts in der Biegeeinheit. In einer alternativen Ausgestaltung kann vorgesehen sein, dass der Biegevorgang bereits begonnen hat, wenn der Drahtabschnitt von dem Endlosdrahtvorrat getrennt wird.

Der Drahtabschnitt der Biegeeinheit kann von einem Drahtreservoir zugeführt werden und nach dem Klemmen des Drahtabschnitts in der Biegeeinheit mittels der Vorschubbewegung der Biegeeinheit entlang der Prozessstrecke ein folgender Drahtabschnitt von dem Drahtreservoir eingezogen und einer nachfolgenden Biegeeinheit zugeführt werden. Ein nachfolgender Drahtabschnitt wird so zwangsweise in die Prozessstrecke hineingezogen oder in diese eingeführt, um den folgenden Drahtabschnitt dann in der nachfolgenden Biegeeinheit aufzunehmen und zu klemmen, worauf der folgende Drahtabschnitt ebenfalls zur Drahtkontur geformt werden kann. Die nachfolgende oder weitere Biegeeinheit können der Biegeeinheit entsprechend ausgeführt und betrieben werden. Die Vorschubbewegung der Biegeeinheit mit dem hierin geklemmten Drahtabschnitt bewirkt so ihrerseits das Nachführen weiterer Drahtabschnitte in die Prozessstrecke hinein.

Die Biegeeinheit wird nach dem Lösen der Drahtkontur aus der Biegeeinheit entlang der Prozessstrecke mittels der Vorschubbewegung einem weiteren oder folgenden Biegevorgang zugeführt, bei dem ein weiterer Drahtabschnitt mittels der Formelemente der Biegeeinheit zu einer weiteren Drahtkontur gebogen wird. Die weitere Drahtkontur kann der Drahtkontur entsprechend oder verschiedenen hiervon ausgeführt sein, zum Beispiel hinsichtlich der Formgebung. Hierbei kann vorgesehen sein, dass unterschiedliche Biegeeinheiten mittels der jeweils zugeordneten Formelemente konfiguriert sind, hinsichtlich der Form unterschiedliche Drahtkonturen in den aufeinanderfolgenden Biegevorgängen herzustellen. Aber auch die aufeinanderfolgende Herstellung hinsichtlich der Form gleicher Drahtkonturen mittels der Biegeeinheiten kann vorgesehen sein.

Die Biegeeinheit kann entlang der Prozessstrecke mittels der Vorschubbewegung kontinuierlich verlagert werden. Die Vorschubbewegung wird kontinuierlich ausgeführt, so dass die Biegeeinheit (wie wahlweise auch weitere Biegeeinheiten) im Wesentlichen frei von Ruhestellungen entlang der Prozessstrecke bewegt wird, wobei hierbei während des kontinuierlichen Vorschubs die verschiedenen Verfahrensschritte ausgeführt werden, insbesondere der Biegevorgang.

Die Biegeeinheit kann entlang der Prozessstrecke mittels der Vorschubbewegung auf einer geschlossenen Bewegungsbahn verlagert werden. Beispielsweise kann eine geschlossene Führungsbahn mit einem oder mehreren einander zugeordneten Führungen vorgesehen sein, entlang welcher die eine oder die mehreren Biegeeinheiten (vorwärts) bewegt werden. Die geschlossene Bewegungsbahn bewirkt, dass die Biegeeinheit beim Umlauf entlang der geschlossenen Bewegungsbahn verschiedene Stationen der Prozessstrecke wiederholt durchläuft, also insbesondere mehrere Biegevorgänge. So kann in einer Ausgestaltung vorgesehen sein, dass die Biegeeinheit nach dem Lösen der Drahtkontur aus der Biegeeinheit erneut in den Aufnahmebereich verlagert wird, um einen weiteren zu formenden Drahtabschnitt aufzunehmen. Insgesamt ist so ein kontinuierlicher Fertigungs- oder Herstellungsprozess ermöglicht.

In einem Umlauf entlang der Bewegungsbahn können mehrere Drähte entweder gemeinsam oder zeitlich und örtlich versetzt eingezogen werden, zum Beispiel mittels einer oberen und einer unteren Biegestrecke, die jeweils mit einer oder mehreren Biegeeinheiten gebildet sind, welche entlang einer oberen und einer unteren Bewegungsbahn bewegt werden. Hierdurch kann der Drahteinlauf oder -einzug an einem Ort mit mehreren Fässern oder an verschiedenen Orten realisiert werden kann.

Die eine oder mehrere Biegeeinheiten können mit gleichbleibender Bewegungsgeschwindigkeit entlang der Prozessstrecke verlagert werden oder umlaufen.

Das Spulenelement kann als eine Wellenwicklung für eine Spulenwicklung einer elektrischen Maschine hergestellt werden. Alternativ können die Spulenelemente zum Beispiel als ein Hairpin hergestellt werden.

Die vorangehend im Zusammenhang mit dem Verfahren zum Herstellen der Drahtkontur für ein Spulenelement einer Spulenwicklung einer elektrischen Maschine beschriebenen Ausgestaltungen können in Verbindung mit der Vorrichtung zum Herstellen der Drahtkontur für ein Spulenelement entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Vorrichtung zum Herstellen einer Drahtkontur für ein Spulenelement einer Spulenwicklung einer elektrischen Maschine von vorn;
- Fig. 2: eine schematische Darstellung der Vorrichtung aus Fig. 1 in Draufsicht;
- Fig. 3: eine schematische Darstellung eines Abschnitts einer Biegeeinheit mit Formelementen zum Formen oder Biegen einer Drahtkontur aus einem Drahtabschnitt und
- Fig. 4: eine schematische Darstellung eines Drahtkontur für ein Spulenelement für eine Wellenwicklung.

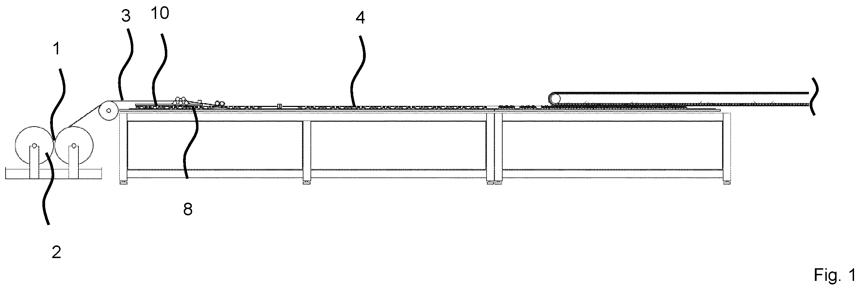

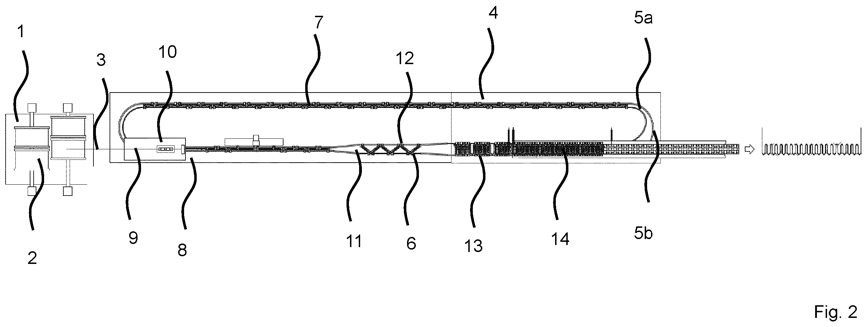

Fig. 1 und 2 zeigen eine schematische Darstellung einer Vorrichtung zum Herstellen einer Drahtkontur für ein Spulenelement einer Spulenwicklung einer elektrischen Maschine von vorn und in Draufsicht. Die Vorrichtung ist eingerichtet, Drahtkonturen für Spulenelemente in einem kontinuierlichen Prozess herzustellen, wobei die Spulenelemente zum Beispiel als ein sogenannter Hairpin oder eine Wellenwicklung ausgeführt werden können. Solche Spulenelemente sind als solche auch noch in anderen Ausführungsformen bekannt. Sie werden aus Drahtabschnitten mittels Biegen oder Formen hergestellt und dann einem weiteren Fertigungsprozess zum Herstellen einer Spulenwicklung für die elektrische Maschine zugeführt, wie dies in verschiedenen Ausführungen als solches bekannt ist.

Bei der Vorrichtung nach den Fig. 1 und 2 ist ein Drahtreservoir 1 mit Drahtrollen 2 vorgesehen, um einen Draht 3 als Endlosmaterial einer Prozessstrecke 4 zuzuführen. Die Prozessstrecke 4 ist mit Führungselementen 5a, 5b gebildet, entlang welcher Biegeeinheiten 6 mit jeweils zugeordneten Formelementen mittels Vorschubbewegung verlagerbar sind. Bei der dargestellten Ausführungsform bilden die Führungselemente 5a, 5b der Prozessstrecke 4 eine geschlossene Bewegungsbahn 7 für die Biegeeinheiten 6.

Entlang der Prozessstrecke 4 werden die Biegeeinheiten 6 zunächst in einen Aufnahmebereich 8 gebracht, wo ein Drahtabschnitt 9, der endseitig an dem Draht 3 gebildet ist, in der Biegeeinheit 6 aufgenommen und geklemmt wird. Zuvor wurde der Draht 3 in einer Richteinrichtung 10 gerichtet. Ergänzend oder alternativ kann bei einer solchen Vorbearbeitung des Drahts 3 vorgesehen sein, eine elektrische Isolierung des Drahts 3 zu prüfen. Auch kann eine Prüfung der Drahtgeometrie bzw. -kontur vorgesehen sein.

Nachdem der Drahtabschnitt 9 in der Biegeeinheit 6 eingelegt oder dort aufgenommen ist, wird er in der Biegeeinheit 6 geklemmt. Es ist vorgesehen, dass die Biegeeinheit 6 sich während des Aufnehmens und des Klemmens des Drahtabschnitts 9 mittels der Vorschubbewegung entlang der Prozessstrecke 4 vorwärts verlagert, sei es zeitweise unterbrochen oder kontinuierlich. Auf diese Weise wird der Draht 3 weiter von der Drahtrolle 2 abgewickelt und in die Prozessstrecke 4 automatisch eingezogen, indem die Biegeeinheit 6 mit dem geklemmten Drahtabschnitt 9 entlang der Prozessstrecke 4 vorwärts bewegt wird. Auch wird der aufzunehmende und zu klemmende Drahtabschnitt 9 hierdurch mit einer Drahtzugspannung beaufschlagt, die bis zum Klemmen erhalten bleibt. Mittels Steuern der Vorschubbewegung entlang der Prozessstrecke 4 kann die Drahtzugspannung einem vorgegebenen Wert entsprechend eingestellt werden.

Nach dem Klemmen des Drahtabschnitts 9 in der Biegeeinheit 6 wird ein Biege- oder Formvorgang ausgeführt, in welchem der Drahtabschnitt 9 zu einer Drahtkontur geformt wird, um so ein Spulenelement für die Spulenwicklung einer elektrischen Maschine herzustellen, beispielsweise ein Hairpin-Element oder eine Wellenwicklung. Für diesen Biegevorgang ist bei der Vorrichtung gemäß Fig. 2 vorgesehen, dass die Biegeeinheit 6 in einen Abschnitt 11 der Prozesstrecke 4 entlang der Führungselemente 5a, 5b gelangt, in welchem diese weiter voneinander beabstandet sind, also im Vergleich zum Aufnahmebereich 8 auseinanderlaufen. Hierdurch wird Formelementen 12 der Biegeeinheit 6 von außen eine Biegebewegung aufgezwungen, welche insbesondere eine Schwenkbewegung der Formelemente 12 umfassen kann, die zusätzlich zur Vorschubbewegung der Biegeeinheit 6 mit dem Formelementen 12 als Ganzes ausgeführt wird, um so den Drahtabschnitt 9 zur Drahtkontur zu formen. In einem Folgeabschnitt oder -bereich 13 ist diese Biege- oder Formbewegung im Wesentlichen vollständig ausgeführt, wahlweise unter Einbeziehung einer Überbiegung, wobei die Führungselemente 5a, 5b hier noch weiter voneinander beabstandet sind, um die Verlagerung der Formelemente 12 zu bewirken. Einem nachfolgenden Abgabebereich 14 der Prozessstrecke 4 wird die so geformte Drahtkontur aus der Biegeeinheit 6 entnommen, wobei hierbei die Klemmung zum Halten der Drahtkontur an der Biegeeinheit 6 gelöst werden kann. Die so hergestellte Drahtkontur für das Spulenelement kann dann dem Abgabebereich 14 nachgelagert weiteren Prozessschritten zugeführt werden.

Die Biegeeinheit 6 gelangt auf der Prozessstrecke 4 nach dem Abgabebereich 14 entlang der Führungselemente 5a, 5b mittels der antreibenden Vorschubbewegung wieder zurück zum Aufnahmebereich 8, um dort erneut einen zu formenden Drahtabschnitt aufzunehmen. Die Bewegung der Biegeeinheiten 6 entlang der Führungselemente 5a, 5b der Prozessstrecke 4 kann kontinuierlich ausgeführt werden, wobei sich die Geschwindigkeit der Vorschubbewegung in einzelnen Abschnitten der Prozessstrecke 4 unterscheiden oder auch durchgehend gleichbleibend sein kann.

Hierbei kann vorgesehen sein, dass der Vorschub der Biegeeinheit 6 im Aufnahmebereich 8, im Abschnitt 11, welcher in einem Zwischenbereich gebildet ist, Folgeabschnitt 13 sowie im Abgabebereich 14 kontinuierlich ausgeführt wird. Alternativ kann vorgesehen sein, an der einen oder anderen Stelle entlang der Prozessstrecke 4 die Vorschubbewegung (kurz) zu unterbrechen, zum Beispiel beim Entnehmen der Drahtkontur aus der Biegeeinheit 6 im Abgabebereich 14. Das Vorsehen der Vorschubbewegung für die Biegeeinheiten 6 entlang der Prozessstrecke 4 kombiniert mit der Biegebewegung der Formelemente 12 der Biegeeinheit 6 zum Formen der Drahtkontur ermöglicht eine zeiteffiziente, kontinuierliche Prozessführung zum Herstellen der Drahtkonturen für Spulenelemente.

Die Biegeeinheiten 6 können mit zugeordneten Formelementen 12 in unterschiedlichen Ausgestaltungen vorgesehen sein. Während bei der Vorrichtung in den Fig. 1 und 2 die Formelemente 12 aufgrund der geänderten Beabstandung der Führungselemente 5a, 5b im Rahmen der Biegebewegung verlagert werden, um die Drahtkontur zu formen, kann alternativ eine Ausgestaltung vorgesehen sein, bei dem die Verlagerung der Formelemente 12 mit Hilfe separater Antriebsmittel an der Biegeeinheit 6 bewirkt wird, also nicht aufgrund der von außen mittels der Führungselemente 5a, 5b erzwungenen Bewegung. Biegeeinheiten mit zugeordneten Formelementen 12 sind als solche in verschiedenen Ausführungsformen bekannt und können in die kontinuierliche Prozessführung integriert werden.

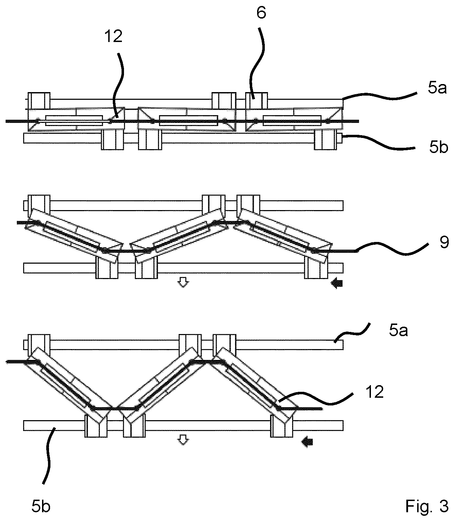

Fig. 3 zeigt eine schematische Darstellung eines Abschnitts einer Biegeeinheit 6 mit Formelementen 12, die aufgrund sich ändernden Abstands zwischen den Führungselementen 5a, 5b die Biegebewegung zum Formen der Drahtkontur ausführen. Hierbei führen die Formelemente 12 eine Schwenkbewegung aus, derart, dass die Formelemente 12 relativ zueinander verlagert werden.

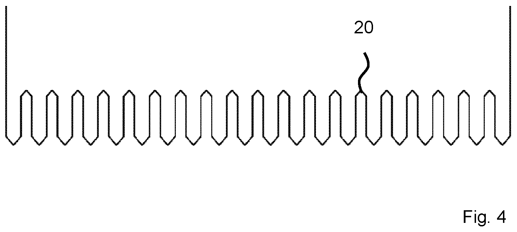

Fig. 4 zeigt eine schematische Darstellung einer auf diese Weise hergestellten Drahtkontur 20 für eine Wellenwicklung einer elektrischen Maschine.

## Patentansprüche

1. Verfahren zum Herstellen einer Drahtkontur für ein Spulenelement einer Spulenwicklung einer elektrischen Maschine, mit:
- Bereitstellen einer Biegeeinheit (6) mit Formelementen (12), die entlang einer Prozessstrecke (4) verlagerbar ist;
- Aufnehmen und Klemmen eines Drahtabschnitts (9) in der Biegeeinheit (6) in einem Aufnahmebereich (8) entlang der Prozessstrecke (4);
- Ausführen eines Biegevorgangs, bei dem der Drahtabschnitt (9) mittels der Formelemente (12) der Biegeeinheit (6) zu einer Drahtkontur für ein Spulenelement einer Spulenwicklung einer elektrischen Maschine geformt wird; und
- Lösen der Drahtkontur aus der Biegeeinheit (6) in einem Abgabebereich (14), der entlang der Prozessstrecke (4) beabstandet von dem Aufnahmebereich (8) angeordnet ist;
wobei der Biegevorgang weiterhin Folgendes umfasst:
- Verlagern der Biegeeinheit (6) mit den Formelementen (12) mittels einer Vorschubbewegung zwischen dem Aufnahmebereich (8) und dem Abgabebereich (14) und
- Verlagern der Formelemente (12) relativ zueinander mittels einer Biegebewegung, um den in der Biegeeinheit (6) aufgenommen Drahtabschnitt (9) zur Drahtkontur zu formen,
wobei die Biegeeinheit (6) nach dem Lösen der Drahtkontur aus der Biegeeinheit (6) entlang der Prozessstrecke (4) mittels der Vorschubbewegung einem weiteren Biegevorgang zugeführt wird, bei dem ein weiterer Drahtabschnitt (9) mittels der Formelemente (12) der Biegeeinheit (6) zu einer weiteren Drahtkontur gebogen wird.

2. Verfahren nach Anspruch 1, **dadurch gekennzeichnet, dass** die Vorschubbewegung und die Biegebewegung wenigstens teilweise zeitgleich ausgeführt werden.

3. Verfahren nach Anspruch 2, **dadurch gekennzeichnet, dass** die Biegeeinheit (6) während des relativen Verlagerns der Formelemente (12) bei der Biegebewegung zum Formen des Drahtabschnitts kontinuierlich mittels der Vorschubbewegung entlang der Prozessstrecke (4) verlagert wird.

4. Verfahren nach Anspruch 1, **dadurch gekennzeichnet, dass** während des relativen Verlagerns der Formelemente (12) mittels der Biegebewegung zum Formen des Drahtabschnitts (9) die Biegeeinheit (6) entlang der Prozessstrecke (4) zumindest zeitweise frei von der Vorschubbewegung in einer Ruhestellung verbleibt.

5. Verfahren nach mindestens einem der vorangehenden Ansprüche, **dadurch gekennzeichnet, dass** die Biegeeinheit (6) während des Aufnehmens und / oder des Klemmens des Drahtabschnitts (9) zumindest zeitweise mittels der Vorschubbewegung entlang der Prozessstrecke (4) bewegt wird.

6. Verfahren nach mindestens einem der vorangehenden Ansprüche, **dadurch gekennzeichnet, dass** die Biegeeinheit (6) während des Lösens der Drahtkontur aus der Biegeeinheit (6) zumindest zeitweise mittels der Vorschubbewegung entlang der Prozessstrecke (4) bewegt wird.

7. Verfahren nach mindestens einem der vorangehenden Ansprüche, **dadurch gekennzeichnet, dass** der Drahtabschnitt (9) mit einer vorgegebenen Drahtzugspannung beaufschlagt wird.

8. Verfahren nach mindestens einem der vorangehenden Ansprüche, **dadurch gekennzeichnet, dass** der Drahtabschnitt (9) vor dem Aufnehmen in der Biegeeinheit (6) in der Prozessstrecke (4) vorbearbeitet wird.

9. Verfahren nach mindestens einem der vorangehenden Ansprüche, **dadurch gekennzeichnet, dass** der Drahtabschnitt (9) vor dem Ausführen des Biegevorgangs von einem Endlosdrahtvorrat getrennt wird.

10. Verfahren nach mindestens einem der vorangehenden Ansprüche, **dadurch gekennzeichnet, dass** der Drahtabschnitt (9) der Biegeeinheit (6) von einem Drahtreservoir zugeführt wird und nach dem Klemmen des Drahtabschnitts (9) in der Biegeeinheit (6) mittels der Vorschubbewegung der Biegeeinheit (6) entlang der Prozessstrecke (4) ein folgender Drahtabschnitt (9) von dem Drahtreservoir eingezogen und einer nachfolgenden Biegeeinheit (6) zugeführt wird.

11. Verfahren nach mindestens einem der vorangehenden Ansprüche, soweit nicht auf Anspruch 4 rückbezogen, **dadurch gekennzeichnet, dass** die Biegeeinheit (6) entlang der Prozessstrecke (4) mittels der Vorschubbewegung kontinuierlich verlagert wird.

12. Verfahren nach mindestens einem der vorangehenden Ansprüche, **dadurch gekennzeichnet, dass** die Biegeeinheit (6) entlang der Prozessstrecke (4) mittels der Vorschubbewegung auf einer geschlossenen Bewegungsbahn verlagert wird.

13. Verfahren nach mindestens einem der vorangehenden Ansprüche, **dadurch gekennzeichnet, dass** das Spulenelement als eine Wellenwicklung für eine Spulenwicklung einer elektrischen Maschine hergestellt wird.

14. Vorrichtung zum Herstellen einer Drahtkontur für ein Spulenelement einer Spulenwicklung einer elektrischen Maschine, mit:
- einer Prozessstrecke (4);
- einer Biegeeinheit (6) mit Formelementen (12) und
- einer Steuer- und Betriebseinrichtung, die der Prozessstrecke (4) zugeordnet und eingerichtet ist, im Biegebetrieb die Biegeeinheit (6) mittels einer Vorschubbewegung entlang der Prozessstrecke (4) zu verlagern und weiterhin Folgendes zu steuern:
- Aufnehmen und Klemmen eines Drahtabschnitts (9) in der Biegeeinheit (6) in einem Aufnahmebereich (8) entlang der Prozessstrecke (4);
- Ausführen eines Biegevorgangs, bei dem der Drahtabschnitt (9) mittels der Formelemente (12) der Biegeeinheit (6) zu einer Drahtkontur für ein Spulenelement einer Spulenwicklung einer elektrischen Maschine geformt wird; und
- Lösen der Drahtkontur aus der Biegeeinheit (6) in einem Abgabebereich (14), der entlang der Prozessstrecke (4) beabstandet von dem Aufnahmebereich (8) angeordnet ist;
wobei der Biegevorgang weiterhin Folgendes umfasst:
- Verlagern der Biegeeinheit (6) mit den Formelementen (12) mittels einer Vorschubbewegung zwischen dem Aufnahmebereich (8) und dem Abgabebereich (14) und
- Verlagern der Formelemente (12) relativ zueinander mittels einer Biegebewegung, um den in der Biegeeinheit (6) aufgenommen Drahtabschnitt (9) zur Drahtkontur zu formen,
wobei die Biegeeinheit (6) nach dem Lösen der Drahtkontur aus der Biegeeinheit (6) entlang der Prozessstrecke (4) mittels der Vorschubbewegung einem weiteren Biegevorgang zugeführt wird, bei dem ein weiterer Drahtabschnitt (9) mittels der Formelemente (12) der Biegeeinheit (6) zu einer weiteren Drahtkontur gebogen wird.

## Claims

1. Method for producing a wire contour for a coil element of a coil winding of an electrical machine, comprising:
- providing a bending unit (6) with shaping elements (12) which can be displaced along a process path (4);
- receiving and clamping a wire portion (9) in the bending unit (6) in a receiving region (8) along the process path (4);
- carrying out a bending process in which the wire portion (9) is shaped by means of the shaping elements (12) of the bending unit (6) to form a wire contour for a coil element of a coil winding of an electrical machine; and
- releasing the wire contour from the bending unit (6) in a dispensing region (14) which is arranged spaced apart from the receiving region (8) along the process path (4);
wherein the bending process further comprises:
- displacing the bending unit (6) with the shaping elements (12) by means of a feed movement between the receiving region (8) and the dispensing region (14), and
- displacing the shaping elements (12) relative to one another by means of a bending movement in order to shape the wire portion (9) received in the bending unit (6) to form the wire contour,
wherein the bending unit (6), after the release of the wire contour from the bending unit (6), is fed along the process path (4) by means of the feed movement to a further bending process in which a further wire portion (9) is bent by means of the shaping elements (12) of the bending unit (6) to form a further wire contour.

2. Method according to Claim 1, **characterized in that** the feed movement and the bending movement are carried out at least partially at the same time.

3. Method according to Claim 2, **characterized in that** the bending unit (6), during the relative displacement of the shaping elements (12) during the bending movement for shaping the wire portion, is displaced continuously by means of the feed movement along the process path (4).

4. Method according to Claim 1, **characterized in that**, during the relative displacement of the shaping elements (12) by means of the bending movement for shaping the wire portion (9), the bending unit (6) remains at least temporarily free of the feed movement in a rest position along the process path (4).

5. Method according to at least one of the preceding claims, **characterized in that** the bending unit (6), during the receiving and/or the clamping of the wire portion (9), is moved at least temporarily by means of the feed movement along the process path (4).

6. Method according to at least one of the preceding claims, **characterized in that** the bending unit (6), during the release of the wire contour from the bending unit (6), is moved at least temporarily by means of the feed movement along the process path (4).

7. Method according to at least one of the preceding claims, **characterized in that** a predetermined wire tensile stress is applied to the wire portion (9).

8. Method according to at least one of the preceding claims, **characterized in that** the wire portion (9) is premachined in the process path (4) before being received in the bending unit (6).

9. Method according to at least one of the preceding claims, **characterized in that** the wire portion (9) is separated from an endless wire supply before carrying out the bending process.

10. Method according to at least one of the preceding claims, **characterized in that** the wire portion (9) is fed to the bending unit (6) from a wire reservoir and, after the clamping of the wire portion (9) in the bending unit (6), a following wire portion (9) is drawn in from the wire reservoir and fed to a following bending unit (6) by means of the feed movement of the bending unit (6) along the process path (4).

11. Method according to at least one of the preceding claims, unless referring back to Claim 4, **characterized in that** the bending unit (6) is displaced continuously along the process path (4) by means of the feed movement.

12. Method according to at least one of the preceding claims, **characterized in that** the bending unit (6) is displaced along the process path (4) on a closed movement path by means of the feed movement.

13. Method according to at least one of the preceding claims, **characterized in that** the coil element is produced as a wave winding for a coil winding of an electrical machine.

14. Device for producing a wire contour for a coil element of a coil winding of an electrical machine, comprising:
- a process path (4);
- a bending unit (6) with shaping elements (12) and
- a control and operating device which is assigned to the process path (4) and is configured, during bending operation, to displace the bending unit (6) by means of a feed movement along the process path (4) and further to control the following:
- receiving and clamping a wire portion (9) in the bending unit (6) in a receiving region (8) along the process path (4);
- carrying out a bending process in which the wire portion (9) is shaped by means of the shaping elements (12) of the bending unit (6) to form a wire contour for a coil element of a coil winding of an electrical machine; and
- releasing the wire contour from the bending unit (6) in a dispensing region (14) which is arranged spaced apart from the receiving region (8) along the process path (4);
wherein the bending process further comprises:
- displacing the bending unit (6) with the shaping elements (12) by means of a feed movement between the receiving region (8) and the dispensing region (14), and
- displacing the shaping elements (12) relative to one another by means of a bending movement in order to shape the wire portion (9) received in the bending unit (6) to form the wire contour,
wherein the bending unit (6), after the release of the wire contour from the bending unit (6), is fed along the process path (4) by means of the feed movement to a further bending process in which a further wire portion (9) is bent by means of the shaping elements (12) of the bending unit (6) to form a further wire contour.

## Revendications

1. Procédé de fabrication d'un contour de fil pour un élément de bobine d'un enroulement de bobine d'une machine électrique, avec :
- mise à disposition d'une unité de pliage (6) avec des éléments de formage (12), qui peut être déplacée le long d'une ligne de processus (4),
- logement et serrage d'une section de fil (9) dans l'unité de pliage (6) dans une zone de réception (8) le long de la ligne de processus (4),
- exécution d'une opération de pliage lors de laquelle la section de fil (9) est formée au moyen des éléments de formage (12) de l'unité de pliage (6) en un contour de fil pour un élément de bobine d'un enroulement de bobine d'une machine électrique, et
- libération du contour de fil de l'unité de pliage (6) dans une zone de dépose (14), qui est disposée distante de la zone de réception (8) le long de la ligne de processus (4),
sachant que l'opération de pliage comprend en plus les opérations suivantes :
- déplacement de l'unité de pliage (6) avec les éléments de formage (12) au moyen d'un mouvement d'avance entre la zone de réception (8) et la zone de dépose (14), et
- déplacement des éléments de formage (12) l'un par rapport à l'autre au moyen d'un mouvement de pliage pour former la section de fil (9) logée dans l'unité de pliage (6) en contour de fil,
sachant que l'unité de pliage (6) après la libération du contour de fil de l'unité de pliage (6) est acheminée le long de la ligne de processus (4) vers une autre opération de pliage au moyen du mouvement d'avance, lors de laquelle une autre section de fil (9) est pliée au moyen des éléments de formage (12) de l'unité de pliage (6) en un autre contour de fil.

2. Procédé selon la revendication 1, que **caractérisé en ce que** le mouvement d'avance et le mouvement de pliage sont exécutés au moins en partie de façon simultanée.

3. Procédé selon la revendication 2, **caractérisé en ce que** l'unité de pliage (6) pendant le déplacement relatif des éléments de formage (12) est déplacée de façon continue lors du mouvement de pliage pour former la section de fil au moyen du mouvement d'avance le long de la ligne de processus (4).

4. Procédé selon la revendication 1, **caractérisé en ce que** pendant le déplacement relatif des éléments de formage (12) au moyen du mouvement de pliage pour former la section de fil (9), l'unité de pliage (6) reste au moins temporairement libre de mouvement d'avance dans une position de repos le long de la ligne de processus (4).

5. Procédé selon au moins l'une quelconque des revendications précédentes, **caractérisé en ce que** l'unité de pliage (6) est déplacée au moins temporairement au moyen du mouvement d'avance le long de la ligne de processus (4) pendant le logement et/ou le serrage de la section de fil (9).

6. Procédé au moins selon l'une quelconque des revendications précédentes, **caractérisé en ce que** pendant la libération du contour de fil de l'unité de pliage (6), l'unité de pliage (6) est déplacée au moins temporairement le long de la ligne de processus (4) au moyen du mouvement d'avance.

7. Procédé au moins selon l'une quelconque des revendications précédentes, **caractérisé en ce que** la section de fil (9) est sollicitée par une contrainte de traction de fil prédéfinie.

8. Procédé selon au moins l'une quelconque des revendications précédentes, **caractérisé en ce que** la section de fil (9) est prétraitée dans la ligne de processus (4) avant le logement dans l'unité de pliage (6).

9. Procédé selon l'une quelconque des revendications précédentes, **caractérisé en ce que** la section de fil (9) est séparée d'une réserve de fil sans fin avant l'exécution de l'opération de pliage.

10. Procédé au moins selon l'une quelconque des revendications précédentes, **caractérisé en ce que** la section de fil (9) est acheminée à l'unité de pliage (6) depuis une réserve de fil et après le serrage de la section de fil (9) dans l'unité de pliage (6) au moyen du mouvement d'avance de l'unité de pliage (6) le long de la ligne de processus (4), une section de fil (9) suivante est introduite depuis la réserve de fil et est acheminée à une unité de pliage (6) suivante.

11. Procédé selon au moins l'une quelconque des revendications précédentes, dans la mesure où il n'est pas dépendant de la revendication 4, **caractérisé en ce que** l'unité de pliage (6) est déplacée le long de la ligne de processus (4) au moyen du mouvement d'avance.

12. Procédé au moins selon l'une quelconque des revendications précédentes, **caractérisé en ce que** l'unité de pliage (6) est déplacée en continu le long de la ligne de processus (4) au moyen du mouvement d'avance sur une voie de déplacement fermée.

13. Procédé au moins selon l'une quelconque des revendications précédentes, **caractérisé en ce que** l'élément de bobine est fabriqué sous la forme d'un enroulement ondulé pour un enroulement de bobine d'une machine électrique.

14. Dispositif de fabrication d'un contour de fil pour un élément de bobine d'un enroulement de bobine d'une machine électrique, avec
- une ligne de processus (4),
- une unité de pliage (6) avec des éléments de formage (12) et
- un système de commande et d'exploitation, qui est attribué à la ligne de processus (4) et agencé pour déplacer en cours de pliage l'unité de pliage (6) au moyen d'un mouvement d'avance le long de la ligne de processus (4) et commander les opérations suivantes :
- logement et serrage d'une section de fil (9) dans l'unité de pliage (6) dans une zone de réception (8) le long de la ligne de processus (4),
- exécution d'une opération de pliage lors de laquelle la section de fil (9) est formée au moyen des éléments de formage (12) de l'unité de pliage (6) en un contour de fil pour un élément de bobine d'un enroulement de bobine d'une machine électrique, et
- libération du contour de fil de l'unité de pliage (6) dans une zone de dépose (14), qui est disposée distante de la zone de réception (8) le long de la ligne de processus (4),
sachant que l'opération de pliage comprend en plus les opérations suivantes :
- déplacement de l'unité de pliage (6) avec les éléments de formage (12) au moyen d'un mouvement d'avance entre la zone de réception (8) et la zone de dépose (14) et
- déplacement des éléments de formage (12) l'un par rapport à l'autre au moyen d'un mouvement de pliage pour former la section de fil (9) logée dans l'unité de pliage (6) au contour de fil,
sachant que l'unité de pliage (6) après la libération du contour de fil de l'unité de pliage (6) est acheminée le long de la ligne de processus (4) vers une autre opération de pliage au moyen du mouvement d'avance, lors de laquelle une autre section de fil (9) est pliée au moyen des éléments de formage (12) de l'unité de pliage (6) en un autre contour de fil.
